# EUROPÄISCHE PATENTSCHRIFT

(11) **EP 1 312 861 B1**
(45) Veröffentlichungstag und Bekanntmachung des Hinweises auf die Patenterteilung: **14.03.2007**
(21) Anmeldenummer: 02025540.2
(22) Anmeldetag: 14.11.2002
(51) Int. Cl.: F23G 7/06

(54) **Abluftreinigungsvorrichtung**
Apparatus for purifying exhaust air
Appareil de purification d'air vicié

(30) Priorität: 14.11.2001 DE 20118418 U
(43) Veröffentlichungstag der Anmeldung: 21.05.2003
(73) Patentinhaber: Dürr Systems GmbH, 70435 Stuttgart (DE)
(72) Erfinder: Bhatnagar, Satpal, 71665 Vaihingen/Enz (DE); Hummel, Bertram, 72644 Oberboihingen (DE); König, Bernd, 71277 Rutesheim (DE); Rieder, Erhard, 71083 Herrenberg (DE)
(74) Vertreter: Hoeger, Stellrecht & Partner Patentanwälte

(56) Entgegenhaltungen:
- EP-A1- 0 587 064
- WO-A1-98/57049
- DE-A1- 19 519 868
- DE-A1- 19 617 790
- US-A- 5 839 894
- US-B1- 6 274 097

## Beschreibung

Die vorliegende Erfindung betrifft eine Vorrichtung zur thermischen und/oder katalytischen Reinigung von verbrennbare Bestandteile enthaltender Abluft, die eine Brennkammer, mindestens zwei von Gasen durchströmbare Wärmespeichermassen enthaltende Behälter zum Erwärmen der zu reinigenden Abluft (Rohgas) vor deren Eintritt in die Brennkammer bzw. zur Aufheizung der Wärmespeichermasse durch die von der Brennkammer kommende gereinigte Abluft (Reingas), einen Rohgaskanal zum Zuführen des Rohgases zu den Behältern und einen Reingaskanal zum Abführen des Reingases aus den Behältern umfaßt, wobei jeder Behälter mindestens eine Zutrittsöffnung, durch welche Rohgas aus dem Rohgaskanal in den Behälter eintritt, und mindestens eine Austrittsöffnung, durch welche Reingas aus dem Behälter in den Reingaskanal austritt, aufweist und wobei die Zutrittsöffnung in eine zwischen der Zutrittsöffnung und der Wärmespeichermasse des Behälters angeordnete Vorkammer mündet.

Eine solche Abluftreinigungsvorrichtung ist beispielsweise aus der DE 195 19 868 A1 bekannt.

Bei dieser und bei weiteren bekannten Abluftreinigungsvorrichtungen der eingangs genannten Art ist die Zutrittsöffnung und die Austrittsöffnung jedes Wärmespeichermassenbehälters horizontal ausgerichtet und wird die Wärmespeichermasse des Behälters in vertikaler Richtung von der Abluft durchströmt, so daß die Flächennormalen der Zutrittsöffnung und der Austrittsöffnung parallel zu der mittleren Strömungsrichtung durch die Wärmespeichermasse des Behälters ausgerichtet sind.

Dadurch, dass die Zutrittsöffnung und die Austrittsöffnung des Behälters in einer sich senkrecht zu der mittleren Strömungsrichtung durch die Wärmespeichermasse des Behälters erstreckenden Ebene nebeneinander angeordnet sind, ergibt sich eine - insbesondere im unteren Bereich der Wärmespeichermasse - sehr ungleichmäßige Strömungsverteilung, so dass die Wärmespeicherkapazität der Wärmetauschermasse nicht optimal ausgenutzt wird.

Die WO 98/57049 A offenbart eine Vorrichtung mit den Merkmalen des Oberbegriffs von Anspruch 1.

Der vorliegenden Erfindung liegt die Aufgabe zugrunde, eine Vorrichtung der eingangs genannten Art zu schaffen, bei welcher die Wärmespeicherkapazität der Wärmetauschermasse besser ausgenutzt wird.

Diese Aufgabe wird durch eine Vorrichtung nach Anspruch 1 gelöst.

Im Falle einer nicht ebenen Zutrittsöffnung ist dabei unter der Flächennormale der Zutrittsöffnung die mittlere Flächennormale der Zutrittsöffnung zu verstehen.

Unter dem Querschnitt eines Abschnitts der Vorkammer ist jeweils der senkrecht zur mittleren Strömungsrichtung durch die Wärmespeichermasse des zugehörigen Behälters genommene Querschnitt zu verstehen.

Dadurch, dass bei der erfindungsgemäßen Vorrichtung die Flächennormale der Zutrittsöffnung nicht parallel, sondern quer zu der mittleren Strömungsrichtung durch die Wärmespeichermasse des Behälters ausgerichtet ist, wird die Asymmetrie der Anströmung der Wärmespeichermasse durch die zugeführte Abluft vermindert, was zu einer Vergleichmäßigung der Abluftströmung durch die Wärmetauschermasse und somit zu einer verbesserten Ausnutzung der Wärmetauschermasse und damit zu einem erhöhten Wirkungsgrad bei vorgegebenem Druckverlust oder zu einem niedrigeren Druckverlust bei vorgegebenem Wirkungsgrad führt.

Der weiteren Vergleichmäßigung der Strömung durch die Wärmespeichermasse dient es, daß sich die Vorkammer zu der Wärmespeichermasse hin erweitert.

Die Erweiterung des Querschnitts der Vorkammer kann kontinuierlich oder in diskreten Schritten (stufenförmig) erfolgen.

Insbesondere kann vorgesehen sein, daß sich der betreffende Abschnitt der Vorkammer dachförmig oder trichterförmig zu der Wärmespeichermasse hin erweitert.

Besonders günstig ist es, wenn die Flächennormale mindestens einer Zutrittsöffnung mindestens eines Behälters im wesentlichen senkrecht zu der mittleren Strömungsrichtung durch die Wärmespeichermasse des Behälters ausgerichtet ist.

Grundsätzlich kann die Flächennormale der Zutrittsöffnung jede beliebige Orientierung relativ zur Vertikalen einnehmen, solange sie nur quer zur mittleren Strömungsrichtung durch die Wärmespeichermasse des zugehörigen Behälters ausgerichtet ist.

Bei einer bevorzugten Ausgestaltung der erfindungsgemäßen Vorrichtung ist jedoch vorgesehen, daß die Flächennormale mindestens einer Zutrittsöffnung mindestens eines Behälters quer, vorzugsweise im wesentlichen senkrecht, zur Vertikalen ausgerichtet ist.

In diesem Fall ist die mittlere Strömungsrichtung durch die Wärmespeichermasse vorzugsweise im wesentlichen vertikal ausgerichtet.

Bei einer bevorzugten Ausgestaltung der erfindungsgemäßen Vorrichtung ist ferner vorgesehen, daß die Flächennormale mindestens einer Austrittsöffnung mindestens eines Behälters quer zu der mittleren Strömungsrichtung durch die Wärmespeichermasse des Behälters ausgerichtet ist.

Vorzugsweise ist vorgesehen, daß die Flächennormale mindestens einer Austrittsöffnung mindestens eines Behälters im wesentlichen senkrecht zu der mittleren Strömungsrichtung durch die Wärmespeichermasse des Behälters ausgerichtet ist.

Grundsätzlich kann die Flächennormale der Austrittsöffnung jede beliebige Orientierung relativ zur Vertikalen einnehmen, solange sie nur quer zur mittleren Strömungsrichtung durch die Wärmespeichermasse des zugehörigen Behälters ausgerichtet ist.

Als besonders günstig hat es sich jedoch erwiesen, wenn die Flächennormale mindestens einer Austrittsöffnung mindestens eines Behälters quer, vorzugsweise im wesentlichen senkrecht, zur Vertikalen ausgerichtet ist.

In diesem Fall ist die mittlere Strömungsrichtung durch die Wärmespeichermasse des Behälters vorzugsweise im wesentlichen vertikal ausgerichtet.

Als besonders günstig hat es sich erwiesen, wenn mindestens eine Zutrittsöffnung und mindestens eine Austrittsöffnung mindestens eines Behälters bezüglich einer Längsmittelebene des Behälters symmetrisch zueinander ausgebildet und angeordnet sind.

Insbesondere kann vorgesehen sein, daß mindestens eine Zutrittsöffnung und mindestens eine Austrittsöffnung mindestens eines Behälters zueinander parallele Flächennormale durch deren jeweilige Flächenschwerpunkte aufweisen.

Um den Zutritt von Rohgas zu dem Behälter und/oder den Austritt von Reingas aus dem Behälter in einfacher Weise steuern zu können, ist vorteilhafterweise vorgesehen, daß mindestens eine Zutrittsöffnung und/oder mindestens eine Austrittsöffnung mindestens eines Behälters mittels eines Ventils verschließbar ist.

Bei einer bevorzugten Ausgestaltung der erfindungsgemäßen Vorrichtung ist vorgesehen, daß das Ventil als ein Tellerventil ausgebildet ist.

Insbesondere kann vorgesehen sein, daß das Ventil einen im wesentlichen scheibenförmigen Ventilkörper aufweist, welcher in seiner Schließstellung im wesentlichen parallel zu der Zutrittsöffnung bzw. im wesentlichen parallel zu der Austrittsöffnung ausgerichtet ist.

Ferner kann vorgesehen sein, daß das Ventil einen im wesentlichen scheibenförmigen Ventilkörper aufweist, welcher in seiner Offenstellung im wesentlichen parallel zu der Zutrittsöffnung bzw. im wesentlichen parallel zu der Austrittsöffnung ausgerichtet ist.

Für eine einfache Betätigung des Ventils ist es von Vorteil, wenn die Vorrichtung eine Bewegungseinrichtung zum Bewegen des Ventilkörpers von der Offenstellung in die Schließstellung und von der Schließstellung in die Offenstellung umfasst.

Diese Bewegungseinrichtung kann insbesondere als eine pneumatische und/oder eine hydraulische Bewegungseinrichtung ausgebildet sein.

Der weiteren Vergleichmäßigung der Strömung der Abluft durch die Wärmespeichermasse dient es, wenn auch mindestens eine Austrittsöffnung mindestens eines Behälters in eine zwischen der Austrittsöffnung und der Wärmespeichermasse des Behälters angeordnete Vorkammer mündet.

Vorzugsweise münden die Zutrittsöffnung und die Austrittsöffnung des Behälters in dieselbe Vorkammer.

Besonders einfach herstellbar ist die Vorkammer, wenn sie einen im wesentlichen rechteckigen Querschnitt aufweist.

Die Vorkammer kann über die Zutrittsöffnung direkt mit dem Rohgaskanal oder mit einer vom Rohgaskanal abzweigenden Zweigleitung verbunden sein.

Ferner kann die Vorkammer über die Austrittsöffnung direkt mit dem Reingaskanal oder mit einer in den Reingaskanal einmündenden Zweigleitung verbunden sein.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: einen schematischen Längsschnitt durch die Wärmespeichermassenbehälter einer Abluftreinigungsanlage;
- Fig. 2: eine perspektivische Darstellung der Abluftreinigungsanlage aus Fig. 1;
- Fig. 3: einen schematischen vertikalen Schnitt durch einen der Wärmespeichermassenbehälter der Abluftreinigungsanlage aus den Fig. 1 und 2;
- Fig. 4: eine perspektivische Darstellung einer Vorkammer des Wärmespeichermassenbehälters aus Fig. 3 mit einer verschließbaren Zutrittsöffnung und einer verschließbaren Austrittsöffnung;
- Fig. 5: eine schematische perspektivische Darstellung eines Rohgaskanals und eines Wärmespeichermassenbehälters einer Abluftreinigungsanlage gemäß dem Stand der Technik;
- Fig. 6: eine Darstellung der statischen Druckverteilung in dem Rohgaskanal und dem Wärmespeichermassenbehälter aus Fig. 5;
- Fig. 7: eine schematische perspektivische Darstellung eines Rohgaskanals und eines Wärmespeichermassenbehälters gemäß der Erfindung; und
- Fig. 8: eine Darstellung der statischen Druckverteilung in dem Rohgaskanal und dem Wärmespeichermassenbehälter aus Fig. 7.

Gleiche oder funktional äquivalente Elemente sind in allen Figuren mit denselben Bezugszeichen bezeichnet.

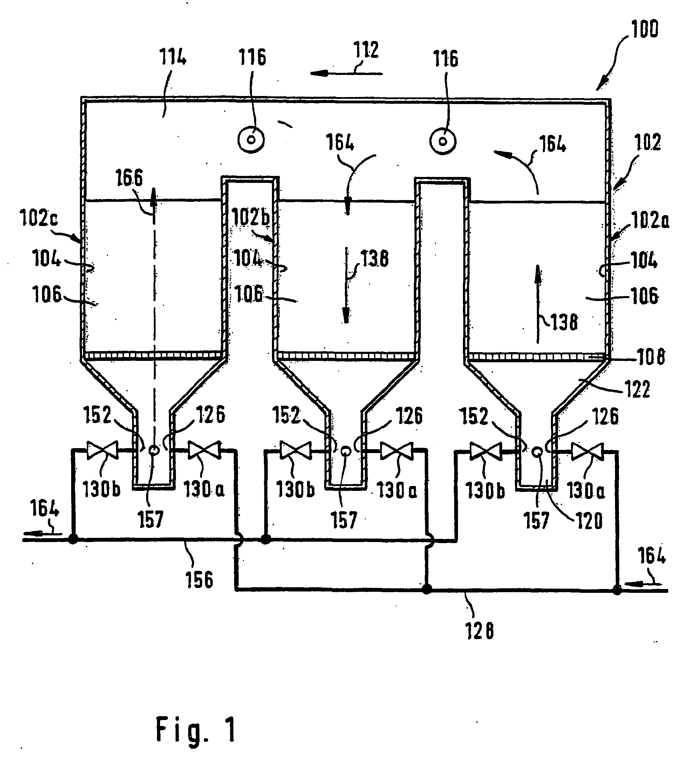

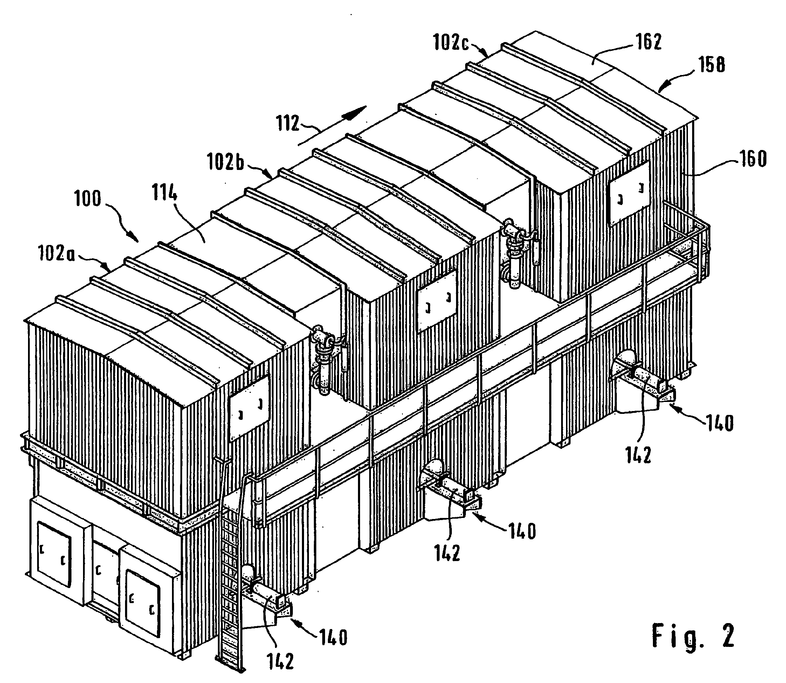

Eine in den Fig. 1 bis 4 sowie 7 und 8 dargestellte, als Ganzes mit 100 bezeichnete Abluftreinigungsanlage umfaßt drei in einer Längsrichtung 112 hintereinander angeordnete Wärmespeichermassenbehälter 102, wobei der erste dieser Behälter im folgenden mit 102a, der zweite, mittlere dieser Behälter mit 102b und der dritte dieser Behälter mit 102c bezeichnet werden wird.

Jeder der Wärmespeichermassenbehälter 102 umfaßt eine im wesentlichen quaderförmige Wärmespeichermassenkammer 104, welche mit einer Wärmespeichermasse 106 befüllt ist.

Diese Wärmespeichermasse 106 kann beispielsweise Sattelkörper aus einem keramischen Material umfassen, welche ungeordnet in der Wärmespeichermassenkammer 104 angeordnet sind.

Alternativ oder ergänzend hierzu kann auch vorgesehen sein, daß die Wärmespeichermasse 106 Wabenkörper umfaßt, welche von Gasdurchtrittskanälen durchzogen sind und prismenförmig, insbesondere quaderförmig, ausgebildet sind und mit ihren Mantelflächen aneinanderliegend so angeordnet werden, daß in der Wärmespeichermassenkammer 104 eine oder mehrere Wabenkörperlagen entstehen, welche das Gas beim Hindurchtreten durch die Wärmespeichermassenkammer 104 passieren muß.

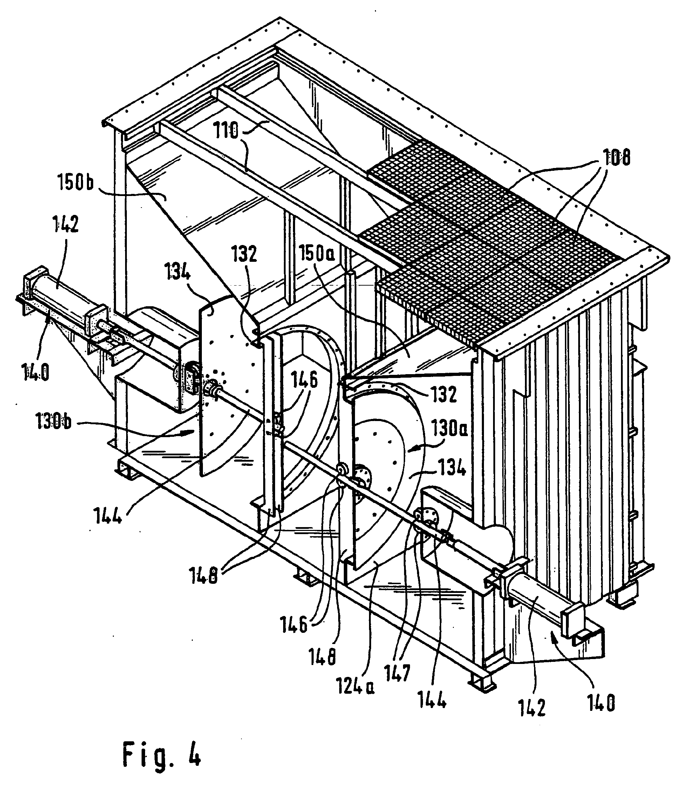

Die Wärmespeichermasse 106 ruht auf Gitterrosten 108, welche ihrerseits von Querträgern 110 getragen werden (siehe Fig. 4).

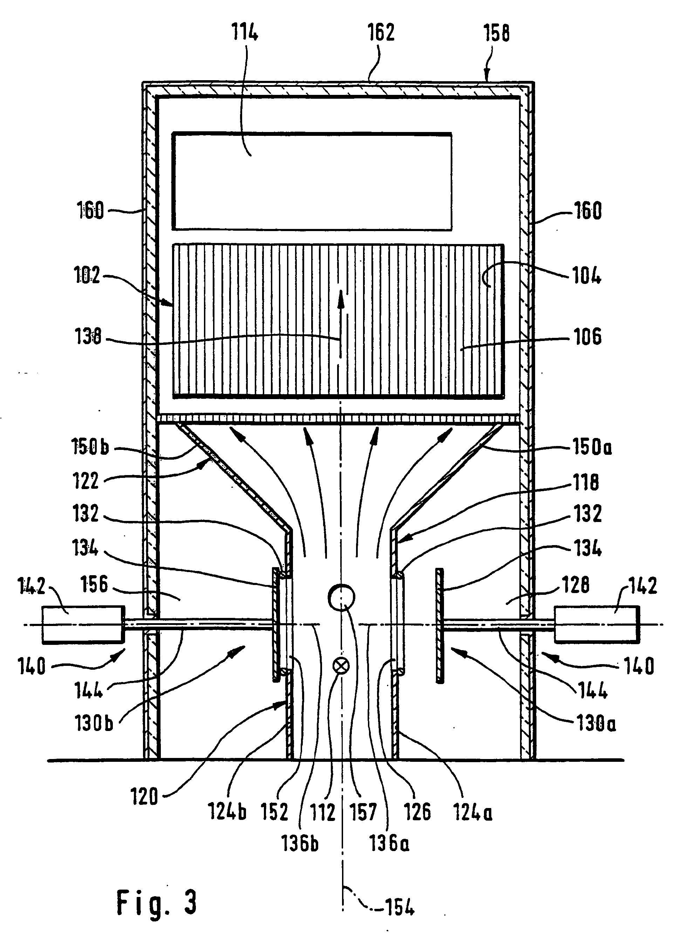

Jede der Wärmespeichermassenkammern 104 mündet an ihrem oberen Ende in eine sich in der Längsrichtung 112 der Abluftreinigungsanlage 100 über alle drei Wärmespeichermassenbehälter 102 erstreckende Brennkammer 114, in welcher ein oder mehrere Brenner 116 angeordnet sind, welchen ein Brennstoff, beispielsweise ein brennbares Gas, zugeführt wird, um die in der zu reinigenden Abluft enthaltenen Schadstoffe zu verbrennen (siehe Fig. 3).

Bei geeigneter Art und Konzentration der in der zu reinigenden Abluft enthaltenen Schadstoffe kann die Abluftreinigungsanlage 100 im stationären Betrieb autotherm betrieben werden, d.h. ohne Zufuhr von zusätzlichem Brennstoff. In diesem Fall werden die Brenner 116 lediglich in der Anfahrphase der Abluftreinigungsanlage 100 benötigt, um die Verbrennung in der Brennkammer 114 in Gang zu bringen. Ist der stationäre Betriebszustand erreicht, können die Brenner 116 abgeschaltet werden.

Statt einer thermischen Verbrennung kann auch eine katalytische Oxidation der in der zu reinigenden Abluft enthaltenen Schadstoffe vorgesehen sein. Der hierzu erforderliche Katalysator kann beispielsweise an den Wärmespeichermassen 106 angeordnet sein. Insbesondere können die Wärmespeichermassen 106 mit einer katalytisch aktiven Beschichtung versehen oder ganz aus einem katalytisch aktiven Material hergestellt sein.

Wie am besten aus Fig. 3 zu ersehen ist, umfaßt jeder Wärmespeichermassenbehälter 102 eine unter der Wärmespeichermassenkammer 104 angeordnete Vorkammer 118, welche einen im wesentlichen quaderförmigen unteren Abschnitt 120, der einen kleineren horizontalen Querschnitt aufweist als die Wärmespeichermassenkammer 104, und einen oberen Abschnitt 122 umfaßt, in welchen der untere Abschnitt 120 mündet und welcher sich zu der Wärmespeichermassenkammer 104 hin trichterförmig erweitert.

Der obere Abschnitt 122 weist an seinem unteren Ende einen horizontalen Querschnitt auf, welcher dem des unteren Abschnitts 120 entspricht, und weist an seinem oberen Ende einen horizontalen Querschnitt auf, welcher dem horizontalen Querschnitt der darüberliegenden Wärmespeichermassenkammer 104 entspricht.

Der untere Abschnitt 120 jeder Vorkammer 118 weist eine erste vertikale, sich parallel zur Längsrichtung 112 der Abluftreinigungsanlage 100 erstreckende erste Seitenwand 124a auf, in welcher eine im wesentlichen kreisförmige Zutrittsöffnung 126 ausgebildet ist, über welche der untere Abschnitt 120 der Vorkammer 118 mit einem sich parallel zur Längsrichtung 112 der Abluftreinigungsanlage 100 erstreckenden Rohgaskanal 128 verbunden ist.

Durch den Rohgaskanal 128 wird der Abluftreinigungsanlage die zu reinigende Abluft zugeführt, welche im folgenden als Rohgas bezeichnet werden wird.

Wie am besten aus den Fig. 3 und 4 zu ersehen ist, ist die Zutrittsöffnung 126 mittels eines ersten Tellerventils 130a verschließbar, welches einen die Zutrittsöffnung 126 umgebenden, ringförmigen Ventilsitz 132 und einen die Zutrittsöffnung 126 überdeckenden, kreisscheibenförmigen Ventilkörper 134 umfaßt.

Die Zutrittsöffnung 126 ist vertikal ausgerichtet, so daß ihre Flächennormale 136a horizontal und somit senkrecht zur vertikalen mittleren Strömungsrichtung 138 in der Wärmespeichermasse 106 ausgerichtet ist.

Der Ventilkörper 134 des Tellerventils 130a ist mittels einer Bewegungseinrichtung 140 zwischen einer Schließstellung, in welcher der Ventilkörper 134 rohgaskanalseitig an dem Ventilkörper 134 im wesentlichen gasdicht anliegt, und einer Offenstellung, in welcher der Ventilkörper 134 im Abstand von dem Ventilsitz 132 innerhalb des Rohgaskanals 128 angeordnet ist, bewegbar.

Die Bewegungseinrichtung 140 kann beispielsweise eine pneumatische Bewegungseinrichtung sein, welche einen Pneumatikzylinder 142 umfaßt, in welchem ein (nicht dargestellter) Kolben mittels Druckluft zwischen zwei Endstellungen verschiebbar ist. Der Kolben ist über eine Verbindungsstange 144 starr mit dem Ventilkörper 134 verbunden, so daß der Ventilkörper 134 der Bewegung des Kolbens folgt.

Wie aus Fig. 4 zu ersehen ist, ist ein dem Kolben abgewandtes freies Ende der Verbindungsstange 144 zwischen zwei Führungsrollen 146 geführt, welche um jeweils eine horizontale, senkrecht zur Flächennormale 136a der Zutrittsöffnung 126 gerichtete Drehachse drehbar an zwei Vertikalträger 148 gelagert sind, welche sich in vertikaler Richtung quer über die Zutrittsöffnung 126 von deren oberem Rand zu deren unterem Rand erstrecken.

Zwischen dem Kolben und den Führungsrollen 146 ist die Verbindungsstange zusätzlich zwischen einem weiteren Paar von Führungsrollen 147 geführt.

Wie am besten aus Fig. 3 zu ersehen ist, bildet die Seitenwand 124a des unteren Abschnitts 120 der Vorkammer 118 eine seitliche Begrenzungswand des Rohgaskanals 128 und bildet eine unter einem Winkel von ungefähr 45° gegen die Horizontale geneigte Seitenwand 150a eine obere Begrenzungswand des Rohgaskanals 128.

Eine der Seitenwand 124a des unteren Abschnitts 120 der Vorkammer 118 gegenüberliegende und im wesentlichen parallel zu der Seitenwand 124a ausgerichtete Seitenwand 124b ist mit einer kreisförmigen Austrittsöffnung 152 versehen, welche bezüglich der vertikalen Längsmittelebene 154 der Vorkammer 118 im wesentlichen spiegelbildlich zu der Zutrittsöffnung 126 ausgebildet ist. Insbesondere ist die Flächennormale 136b der Austrittsöffnung 152, welche durch den Flächenschwerpunkt der Austrittsöffnung 152 verläuft, parallel zu der Flächennormale 136a durch den Flächenschwerpunkt der Zutrittsöffnung 126 ausgerichtet.

Die Flächennormale 136b der Austrittsöffnung 152 ist somit ebenfalls horizontal und senkrecht zu der mittleren Strömungsrichtung 138 des Gases durch die Wärmespeichermasse 106 ausgerichtet.

Über die Austrittsöffnung 152 ist die Vorkammer 118 mit einem sich parallel zur Längsrichtung 112 der Abluftreinigungsanlage erstreckenden Reingaskanal 156 verbunden, welcher dem Abtransport von gereinigter Abluft aus der Abluftreinigungsanlage 100 dient.

Die durch Verbrennung der Schadstoffe in der Brennkammer 114 gereinigte Abluft wird im folgenden als Reingas bezeichnet werden.

Wie aus Fig. 3 zu ersehen ist, bildet die Seitenwand 124b des unteren Abschnitts 120 der Vorkammer 118 eine seitliche Begrenzung des Reingaskanals 156, während eine unter einem Winkel von ungefähr 45° gegen die Horizontale geneigte Seitenwand 150b des oberen Abschnitts 122 der Vorkammer 118 eine obere Begrenzung des Reingaskanals 156 bildet.

Die Austrittsöffnung ist ebenso wie die Zutrittsöffnung 126 mittels eines Tellerventils 130b verschließbar.

Das Tellerventil 130b ist bezüglich der Längsmittelebene 154 der Vorkammer 118 spiegelsymmetrisch zu dem Tellerventil 130a ausgebildet und umfaßt insbesondere eine Bewegungseinrichtung 140, eine Verbindungsstange 144, einen die Austrittsöffnung 152 ringförmig umgebenden Ventilsitz 132 und einen kreisscheibenförmigen Ventilkörper 134, der zwischen einer Schließstellung, in welcher der Ventilkörper 134 dicht an dem Ventilsitz 132 anliegt, und einer Offenstellung, in welcher der Ventilkörper 134 im Abstand von dem Ventilsitz 132 innerhalb des Reingaskanals 156 angeordnet ist, bewegbar ist.

In vertikaler Richtung ist die Flächennormale 136b durch den Flächenschwerpunkt der Austrittsöffnung 152 um einige Zentimeter senkrecht zur Längsrichtung der Verbindungsstangen 144 gegenüber der Flächennormalen 136a durch den Flächenschwerpunkt der Zutrittsöffnung 126 versetzt, um zu vermeiden, daß sich die Verbindungsstangen 144 der Tellerventile 130a und 103b gegenseitig behindern.

Ferner mündet in den unteren Abschnitt 120 der Vorkammer 118 an einer mittels eines (nicht dargestellten) Ventils verschließbaren Spülgaszuführöffnung 157 eine (nicht dargestellte) Spülgasleitung, aus welcher der Vorkammer 118 ein Spülgas, beispielsweise Frischluft, zuführbar ist, um Rohgasreste aus dem Wärmespeicherbehälter 102 in die Brennkammer 114 auszuspülen.

Die Wärmespeichermassenbehälter 102, die Brennkammer 114, der Rohgaskanal 128 und der Reingaskanal 156 sind in einem Gehäuse 158 der Abluftreinigungsanlage 100 angeordnet, dessen seitliche Außenwände 160 und dessen Deckenwand 162 mit einer Wärmeisolierung versehen sind, um einen den Wirkungsgrad der Abluftreinigungsanlage 100 beeinträchtigenden Verlust von Wärme aus der Abluftreinigungsanlage 100 in die Umgebung zu vermeiden.

Die vorstehend beschriebene Abluftreinigungsanlage 100 funktioniert wie folgt:

Durch den Rohgaskanal 128 wird der Abluftreinigungsanlage 100 Rohgas von einer Rohgasquelle, beispielsweise von einer Lackieranlage, zugeführt.

In einem ersten Betriebszustand ist beispielsweise das Tellerventil 130a des ersten Wärmespeichermassenbehälters 102a geöffnet, während das Tellerventil 130b desselben Wärmespeichermassenbehälters 102a geschlossen ist, so daß das Rohgas durch die Zutrittsöffnung 126 des ersten Wärmespeichermassenbehälters 102a in dessen Vorkammer 118 und von dort in die Wärmespeichermassenkammer 104 eintritt.

Die Strömungsrichtung der Abluft durch die Abluftreinigungsanlage 100 ist in den Figuren durch die Pfeile 164 angegeben.

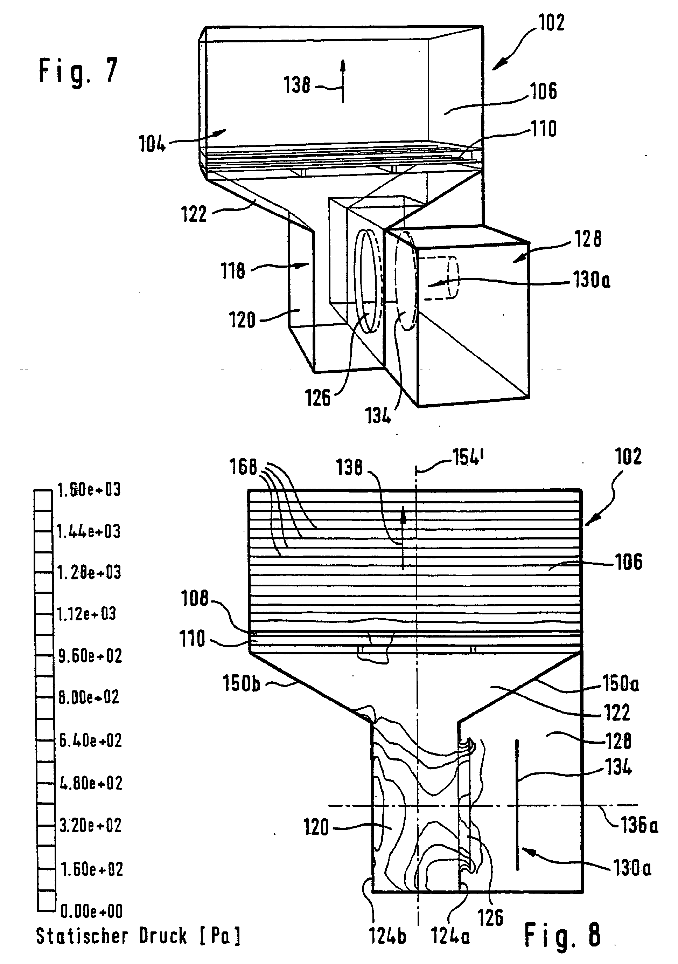

Durch die vertikale Ausrichtung der Zutrittsöffnung 126 und durch die trichterförmige Erweiterung des Strömungsquerschnitts des oberen Abschnitts 122 der Vorkammer 118 entsteht in der Wärmespeichermasse 106 des Wärmespeichermassenbehälters 102a dabei eine sehr gleichmäßige Strömung mit Isobaren 168, welche im wesentlichen senkrecht zur mittleren Strömungsrichtung 138 durch die Wärmespeichermasse 106 ausgerichtet sind. Die aus einer Computersimulation gewonnene Verteilung des statischen Druckes in der in Fig. 7 gezeigten Anordnung ist in Fig. 8 dargestellt.

Diese gleichmäßige Anströmung des Wärmetauschermaterials führt zu einer optimalen Ausnutzung der Wärmetauschermasse 106 und so zu einem erhöhtem Wirkungsgrad bei vorgegebenem Druckverlust oder zu einem niedrigeren Druckverlust bei vorgegebenem Wirkungsgrad.

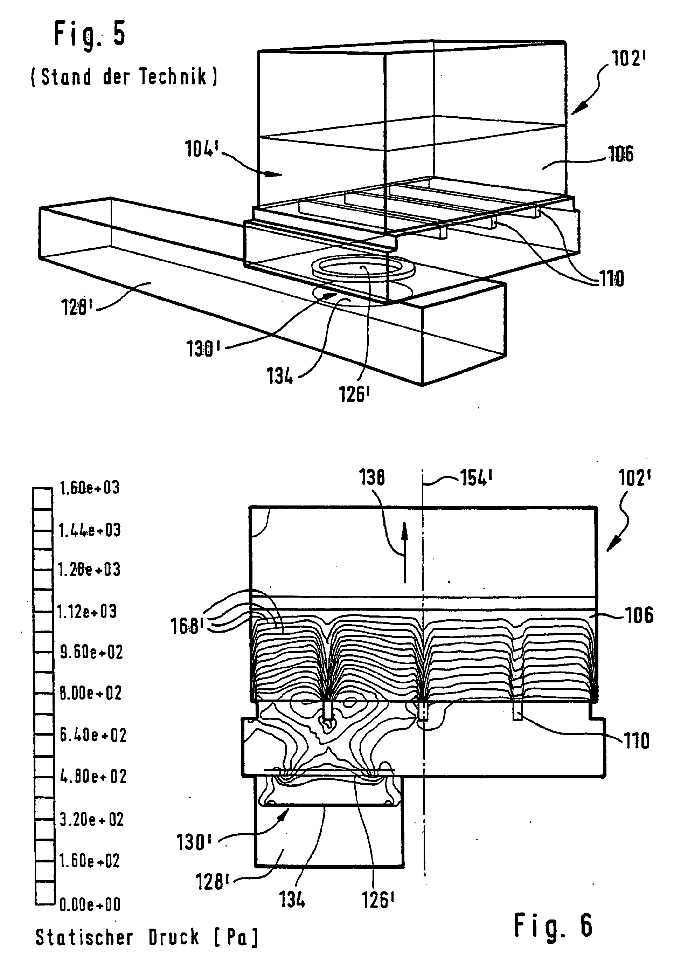

Bei der in Fig. 5 und 6 dargestellten Abluftreinigungsanlage nach dem Stand der Technik, bei welcher ein Wärmespeichermassenbehälter 102' an seiner Unterseite über eine horizontal ausgerichtete Zutrittsöffnung 126', welche mittels eines horizontal liegenden Tellerventils 130' verschließbar ist, mit einem unterhalb des Wärmespeichermassenbehälters 102" verlaufenden Rohgaskanal 128' verbunden ist, ergibt sich hingegen durch die stark asymmetrische Anordnung der Zutrittsöffnung 126' in Bezug auf die Längsmittelebene 154' der Vorkammer 118' des Wärmespeichermassenbehälters 102' eine - zumindest im unteren Bereich der Wärmespeichermasse 106 - sehr ungleichmäßige Strömungsverteilung in der Wärmespeichermassenkammer 104' und somit eine suboptimale Ausnutzung der Wärmetauschermasse 106. Die aus einer Computersimulation gewonnene Verteilung des statischen Drucks mit den Isobaren 168' in der in Fig. 5 gezeigten Anordnung ist in Fig. 6 dargestellt.

Die Wärmespeichermasse 106 des ersten Wärmespeichermassenbehälters 102a befindet sich im ersten Betriebszustand auf einer verhältnismäßig hohen Temperatur, so daß sie das die Wärmespeichermasse 106 von unten nach oben durchströmende Rohgas aufheizt. Das so aufgeheizte Rohgas tritt am oberen Ende des ersten Wärmespeichermassenbehälters 102a in die Brennkammer 114 ein, worauf das Rohgas in der Brennkammer 114 durch thermische Oxidation der darin enthaltenen Schadstoffe gereinigt wird.

Das so gebildete, von Schadstoffen freie Reingas strömt (in der Blickrichtung der Fig. 1 gesehen) von rechts nach links durch die Brennkammer 114 und über die Mündungsöffnung des zweiten Wärmespeichermassenbehälters 102b von oben in die Wärmespeichermassenkammer 104 desselben ein. Beim Durchströmen der im Wärmespeichermassenbehälter 102b enthaltenen Wärmespeichermasse 106 von oben nach unten gibt das heiße Reingas Wärme an diese Wärmespeichermasse ab und heizt diese so auf, bevor das heiße Reingas den Wärmespeichermassenbehälter 102b durch dessen Vorkammer 118 und das geöffnete Tellerventil 130b an der Austrittsöffnung 152 des Wärmespeichermassenbehälters 102b verläßt.

Die Zutrittsöffnung 126 des zweiten Wärmespeichermassenbehälters 102b ist in diesem Betriebszustand durch das Tellerventil 130a verschlossen.

Das Reingas aus dem Wärmespeichermassenbehälter 102b wird durch den Reingaskanal 156 aus der Abluftreinigungsanlage abgeführt und beispielsweise einem Abluftkamin zugeführt.

Der dritte Wärmespeichermassenbehälter 102c wird in diesem ersten Betriebszustand mittels eines Spülgases aus der (nicht dargestellten) Spülgasleitung von unten nach oben durchspült, um in der Vorkammer 118 und in der Wärmespeichermassenkammer 104 dieses dritten Wärmespeichermassenbehälters 102c noch verbliebene Rohgasreste nach oben in die Brennkammer 114 zu befördern und dort durch thermische Oxidation zu reinigen. Die Strömungsrichtung des Spülgases ist in Fig. 1 durch den gebrochenen Pfeil 166 dargestellt.

Die beiden Tellerventile 130a und 130b des dritten Wärmespeichermassenbehälters 102c sind in diesem Spülzustand des Wärmespeichermassenbehälters 102c beide geschlossen.

Nach einer vorgegeben Taktzeit wird die Abluftreinigungsanlage 100 in einen zweiten Betriebszustand geschaltet, in welchem die Zutrittsöffnung 126 des zweiten Wärmespeichermassenbehälters 102b geöffnet und dessen Austrittsöffnung 152 geschlossen ist, so daß das Rohgas nunmehr durch den zweiten Wärmespeichermassenbehälter 102b in die Brennkammer 114 einströmt und sich dabei beim Durchtritt durch die im vorherigen Betriebszustand aufgeheizte Wärmespeichermasse 106 des Wärmespeichermassenbehälters 102b erwärmt.

Die Austrittsöffnung 152 des im vorherigen Betriebszustand gespülten Wärmespeichermassenbehälters 102c ist nunmehr geöffnet, so daß das Reingas aus der durch die Wärmespeichermasse 106 des dritten Wärmespeichermassenbehälters 102c in den Reingaskanal 156 entweichen und dabei die Wärmespeichermasse 106 des dritten Wärmespeichermassenbehälters 102c aufheizen kann.

Der erste Wärmespeichermassenbehälter 102a befindet sich nunmehr im Spülzustand, in welchem sowohl die Zutrittsöffnung 126 als auch die Austrittsöffnung 152 dieses Wärmespeichermassenbehälters geschlossen sind.

Auf diesen zweiten Betriebszustand folgt ein dritter Betriebszustand der Abluftreinigungsanlage 100, in welcher das Rohgas durch den dritten Wärmespeichermassenbehälter 102c in die Brennkammer 114 eintritt, das Reingas durch den ersten Wärmespeichermassenbehälter 102a in den Reingaskanal 156 austritt und der zweite Wärmespeichermassenbehälter 102b gespült wird.

Nach diesem dritten Betriebszustand ist ein Zyklus der Abluftreinigungsanlage 100 abgeschlossen, und ein neuer Betriebszyklus beginnt wieder, in dem die Abluftreinigungsanlage 100 in den vorstehend beschriebenen ersten Betriebszustand geschaltet wird.

## Patentansprüche

1. Vorrichtung zur thermischen und/oder katalytischen Reinigung von verbrennbare Bestandteile enthaltender Abluft, umfassend
eine Brennkammer (114),
mindestens zwei von Gasen durchströmbare Wärmespeichermassen (106) enthaltende Behälter (102) zum Erwärmen der zu reinigenden Abluft (Rohgas) vor deren Eintritt in die Brennkammer (114) bzw. zur Aufheizung der Wärmespeichermasse (106) durch die von der Brennkammer (114) kommende gereinigte Abluft (Reingas),
einen Rohgaskanal (128) zum Zuführen des Rohgases zu den Behältern (102) und
einen Reingaskanal (156) zum Abführen des Reingases aus den Behältern (102),
wobei jeder Behälter (102) mindestens eine Zutrittsöffnung (126), durch welche Rohgas aus dem Rohgaskanal (128) in den Behälter (102) eintritt, und mindestens eine Austrittsöffnung (152), durch welche Reingas aus dem Behälter (102) in den Reingaskanal (156) austritt, aufweist, und
wobei die Zutrittsöffnung (126) in eine zwischen der Zutrittsöffnung (126) und der Wärmespeichermasse (106) des Behälters (102) angeordnete Vorkammer (118) mündet,
wobei die Flächennormale (136a) mindestens einer Zutrittsöffnung (126) mindestens eines Behälters (102) quer zu der mittleren Strömungsrichtung (138) durch die Wärmespeichermasse (106) des Behälters (102) ausgerichtet ist und
wobei die Vorkammer (118) einen Abschnitt (122) mit einem sich zu der Wärmespeichermasse (106) hin erweiternden Querschnitt aufweist,
**dadurch gekennzeichnet, dass**
die Vorkammer (118) einen Abschnitt (120) mit einem im wesentlichen konstanten Querschnitt aufweist und
dass mindestens eine Zutrittsöffnung (126) und/oder mindestens eine Austrittsöffnung (152) des Behälters (102) in den Abschnitt (120) der Vorkammer (118) mit dem im wesentlichen konstanten Querschnitt mündet.

2. Vorrichtung nach Anspruch 1, **dadurch gekennzeichnet, dass** die Flächennormale (136a) mindestens einer Zutrittsöffnung (126) mindestens eines Behälters (102) im wesentlichen senkrecht zu der mittleren Strömungsrichtung (138) durch die Wärmespeichermasse (106) des Behälters (102) ausgerichtet ist.

3. Vorrichtung nach einem der Ansprüche 1 oder 2, **dadurch gekennzeichnet, dass** die Flächennormale (136a) mindestens einer Zutrittsöffnung (126) mindestens eines Behälters (102) quer zur Vertikalen ausgerichtet ist.

4. Vorrichtung nach Anspruch 3, **dadurch gekennzeichnet, dass** die Flächennormale (136a) mindestens einer Zutrittsöffnung (126) mindestens eines Behälters (102) im wesentlichen senkrecht zur Vertikalen ausgerichtet ist.

5. Vorrichtung nach einem der Ansprüche 1 bis 4, **dadurch gekennzeichnet, dass** die Flächennormale (136b) mindestens einer Austrittsöffnung (152) mindestens eines Behälters (102) quer zu der mittleren Strömungsrichtung (138) durch die Wärmespeichermasse (106) des Behälters (102) ausgerichtet ist.

6. Vorrichtung nach Anspruch 5, **dadurch gekennzeichnet, dass** die Flächennormale (136b) mindestens einer Austrittsöffnung (152) mindestens eines Behälters (102) im wesentlichen senkrecht zu der mittleren Strömungsrichtung (138) durch die Wärmespeichermasse (106) des Behälters (102) ausgerichtet ist.

7. Vorrichtung nach einem der Ansprüche 1 bis 6, **dadurch gekennzeichnet, dass** die Flächennormale (136b) mindestens einer Austrittsöffnung (152) mindestens eines Behälters (102) quer zur Vertikalen ausgerichtet ist.

8. Vorrichtung nach Anspruch 7, **dadurch gekennzeichnet, dass** die Flächennormale (136b) mindestens einer Austrittsöffnung (152) mindestens eines Behälters (102) im wesentlichen senkrecht zur Vertikalen ausgerichtet ist.

9. Vorrichtung nach einem der Ansprüche 1 bis 8, **dadurch gekennzeichnet, dass** mindestens eine Zutrittsöffnung (126) und mindestens eine Austrittsöffnung (152) mindestens eines Behälters (102) bezüglich einer Längsmittelebene (154) des Behälters (102) im wesentlichen symmetrisch zueinander ausgebildet und angeordnet sind.

10. Vorrichtung nach einem der Ansprüche 1 bis 9, **dadurch gekennzeichnet, dass** mindestens eine Zutrittsöffnung (126) und mindestens eine Austrittsöffnung (152) mindestens eines Behälters (102) zueinander parallele Flächennormale (136a, 136b) durch deren jeweilige Flächenschwerpunkte aufweisen.

11. Vorrichtung nach einem der Ansprüche 1 bis 10, **dadurch gekennzeichnet, dass** mindestens eine Zutrittsöffnung (126) und/oder mindestens eine Austrittsöffnung (152) mindestens eines Behälters (102) mittels eines Ventils verschließbar ist.

12. Vorrichtung nach Anspruch 11, **dadurch gekennzeichnet, dass** das Ventil als ein Tellerventil (130a, 130b) ausgebildet ist.

13. Vorrichtung nach einem der Ansprüche 11 oder 12, **dadurch gekennzeichnet, dass** das Ventil einen im wesentlichen scheibenförmigen Ventilkörper (134) aufweist, welcher in seiner Schließstellung im wesentlichen parallel zu der Zutrittsöffnung (126) bzw. im wesentlichen parallel zu der Austrittsöffnung (152) ausgerichtet ist.

14. Vorrichtung nach einem der Ansprüche 11 bis 13, **dadurch gekennzeichnet, dass** das Ventil einen im wesentlichen scheibenförmigen Ventilkörper (134) aufweist, welcher in seiner Offenstellung im wesentlichen parallel zu der Zutrittsöffnung (126) bzw. im wesentlichen parallel zu der Austrittsöffnung (152) ausgerichtet ist.

15. Vorrichtung nach einem der Ansprüche 13 oder 14, **dadurch gekennzeichnet, dass** die Vorrichtung (100) eine Bewegungseinrichtung (140) zum Bewegen des Ventilkörpers (134) von der Offenstellung in die Schließstellung und von der Schließstellung in die Offenstellung umfasst.

16. Vorrichtung nach Anspruch 15, **dadurch gekennzeichnet, dass** die Bewegungseinrichtung (140) eine pneumatische und/oder hydraulische Bewegungseinrichtung ist.

17. Vorrichtung nach einem der Ansprüche 1 bis 16, **dadurch gekennzeichnet, dass** mindestens eine Austrittsöffnung (152) mindestens eines Behälters (102) in eine zwischen der Austrittsöffnung (152) und der Wärmespeichermasse (106) des Behälters (102) angeordnete Vorkammer (118) mündet.

18. Vorrichtung nach einem der Ansprüche 1 bis 17, **dadurch gekennzeichnet, dass** die Vorkammer (118) einen im wesentlichen rechteckigen Querschnitt aufweist.

## Claims

1. Device for thermally and/or catalytically cleaning waste air that contains combustible constituents, comprising a combustion chamber (114), at least two receptacles (102) containing heat retaining masses (106), through which gases are able to flow, for heating the waste air (untreated gas) to be cleaned before it is introduced into the combustion chamber (114) and/or for heating the heat retaining mass (106) with the cleaned waste gas (clean gas) arriving from the combustion chamber (114), an untreated gas channel (128) for feeding the untreated gas to the receptacles (102) and a clean gas channel (156) for discharging the clean gas from the receptacles (102), wherein each receptacle (102) contains at least one inlet opening (126) through which untreated gas is introduced into the receptacle (102) from the untreated gas channel (128), and at least one outlet opening (152) through which clean gas is discharged from the receptacle (102) into the clean gas channel (156), and wherein the inlet opening (126) leads into an antechamber (118) arranged between the inlet opening (126) and the heat retaining mass (106) of the receptacle (102), wherein the surface normal (136a) of at least one inlet opening (126) of at least one receptacle (102) is oriented transverse to the mean flow direction (138) through the heat retaining mass (106) of the receptacle (102) and wherein the antechamber (118) has a section (122) with a cross section that widens toward the heat retaining mass (106), **characterised in that** the antechamber (118) has a section (120) with a substantially constant cross section and **in that** at least one inlet opening (126) and/or at least one outlet opening (152) of the receptacle (102) lead into the section (120) of the antechamber (118) with the substantially constant cross section.

2. Device according to claim 1, **characterised in that** the surface normal (136a) of at least one inlet opening (126) of at least one receptacle (102) is oriented substantially perpendicular to the mean flow direction (138) through the heat retaining mass (106) of the receptacle (102).

3. Device according to either of claims 1 or 2, **characterised in that** the surface normal (136a) of at least one inlet opening (126) of at least one receptacle (102) is oriented transverse to the vertical.

4. Device according to claim 3, **characterised in that** the surface normal (136a) of at least one inlet opening (126) of at least one receptacle (102) is oriented substantially perpendicular to the vertical.

5. Device according to any one of claims 1 to 4, **characterised in that** the surface normal (136b) of at least one outlet opening (152) of at least one receptacle (102) is oriented transverse to the mean flow direction (138) through the heat retaining mass (106) of the receptacle (102).

6. Device according to claim 5, **characterised in that** the surface normal (136b) of at least one outlet opening (152) of at least one receptacle (102) is oriented substantially perpendicular to the mean flow direction (138) through the heat retaining mass (106) of the receptacle (102).

7. Device according to any one of claims 1 to 6, **characterised in that** the surface normal (136b) of at least one outlet opening (152) of at least one receptacle (102) is oriented transverse to the vertical.

8. Device according to claim 7, **characterised in that** the surface normal (136b) of at least one outlet opening (152) of at least one receptacle (102) is oriented substantially perpendicular to the vertical.

9. Device according to any one of claims 1 to 8, **characterised in that** at least one inlet opening (126) and at least one outlet opening (152) of at least one receptacle (102) are configured and arranged substantially symmetrically to one another relative to a central longitudinal plane (154) of the receptacle (102).

10. Device according to any one of claims 1 to 9, **characterised in that** at least one inlet opening (126) and at least one outlet opening (152) of at least one receptacle (102) have mutually parallel surface normals (136a, 136b) through their respective centroids.

11. Device according to any one of claims 1 to 10, **characterised in that** at least one inlet opening (126) and/or at least one outlet opening (152) of at least one receptacle (102) can be closed by means of a valve.

12. Device according to claim 11, **characterised in that** the valve is configured as a disc valve (130a, 130b).

13. Device according to either of claims 11 or 12, **characterised in that** the valve has a substantially disc-shaped valve body (134), which is oriented substantially parallel to the inlet opening (126) and/or substantially parallel to the outlet opening (152) in its closed position.

14. Device according to any one of claims 11 to 13, **characterised in that** the valve has a substantially disc-shaped valve body (134) that is oriented substantially parallel to the inlet opening (126) and/or substantially parallel to the outlet opening (152) in its open position.

15. Device according to either of claims 13 or 14, **characterised in that** the device (100) comprises a movement mechanism (140) for moving the valve body (134) from the open position to the closed position and from the closed position to the open position.

16. Device according to claim 15, **characterised in that** the movement mechanism (140) is a pneumatic and/or hydraulic movement mechanism.

17. Device according to any one of claims 1 to 16, **characterised in that** at least one outlet opening (152) of at least one receptacle (102) leads into an antechamber (118) that is arranged between the outlet opening (152) and the heat retaining mass (106) of the receptacle (102).

18. Device according to any one of claims 1 to 17, **characterised in that** the antechamber (118) has a substantially rectangular cross section.

## Revendications

1. Dispositif de purification thermique et/ou catalytique d'air vicié contenant des constituants combustibles, comportant : une chambre de combustion (114),au moins deux réservoirs (102) comprenant des masses d'accumulation de chaleur (106) et à travers lesquels peuvent passer des gaz en vue de l'échauffement de l'air vicié (gaz brut) à purifier avant son entrée dans la chambre de combustion (114), ou du réchauffage de la masse d'accumulation de chaleur (106) par l'air vicié purifié (gaz purifié) venant de ladite chambre de combustion (114) ; une tubulure de gaz brut (128) destinée à la livraison du gaz brut dans les réservoirs (102), et une tubulure de gaz purifié (156) destinée à l'évacuation du gaz purifié depuis les réservoirs (102), chacun des réservoirs (102) comportant au moins une ouverture d'entrée (126) par l'intermédiaire de laquelle du gaz brut venant de la tubulure de gaz brut (128) entre dans le réservoir (102), et au moins une ouverture de sortie (152) par l'intermédiaire de laquelle du gaz purifié venant dudit réservoir (102) sort dans la tubulure de gaz purifié (156), l'ouverture d'entrée (126) débouchant dans une préchambre (118) disposée entre ladite ouverture d'entrée (126) et la masse d'accumulation de chaleur (106) du réservoir (102), la normale surfacique (136a) d'au moins une ouverture d'entrée (126) d'au moins un réservoir (102) étant alignée transversalement par rapport à la direction d'écoulement moyenne (138) par la masse d'accumulation de chaleur (106) du réservoir (102), et la préchambre (118) comportant un secteur (122) avec une section s'élargissant en direction de la masse d'accumulation de chaleur (106), **caractérisé en ce que** la préchambre (118) comporte un secteur (120) avec une section sensiblement constante, et qu'au moins une ouverture d'entrée (126) et/ou au moins une ouverture de sortie (152) du réservoir (102) débouche dans le secteur (120) de la préchambre (118) avec la section sensiblement constante.

2. Dispositif selon la revendication 1, **caractérisé en ce que** la normale surfacique (136a) d'au moins une ouverture d'entrée (126) d'au moins un réservoir (102) est alignée sensiblement de manière verticale par rapport à la direction d'écoulement moyenne (138) par la masse d'accumulation de chaleur (106) du réservoir (102).

3. Dispositif selon l'une quelconque des revendications 1 ou 2, **caractérisé en ce que** la normale surfacique (136a) d'au moins une ouverture d'entrée (126) d'au moins un réservoir (102) est alignée transversalement par rapport à la verticale.

4. Dispositif selon la revendication 3, **caractérisé en ce que** la normale surfacique (136a) d'au moins une ouverture d'entrée (126) d'au moins un réservoir (102) est alignée sensiblement de manière perpendiculaire par rapport à la verticale.

5. Dispositif selon l'une quelconque des revendications 1 à 4, **caractérisé en ce que** la normale surfacique (136b) d'au moins une ouverture de sortie (152) d'au moins un réservoir (102) est alignée transversalement par rapport à la direction d'écoulement moyenne (138) par la masse d'accumulation de chaleur (106) du réservoir (102).

6. Dispositif selon la revendication 5, **caractérisé en ce que** la normale surfacique (136b) d'au moins une ouverture de sortie (152) d'au moins un réservoir (102) est alignée sensiblement de manière perpendiculaire par rapport à la direction d'écoulement moyenne (138) par la masse d'accumulation de chaleur (106) du réservoir (102).

7. Dispositif selon l'une quelconque des revendications 1 à 6, **caractérisé en ce que** la normale surfacique (136b) d'au moins une ouverture de sortie (152) d'au moins un réservoir (102) est alignée transversalement par rapport à la verticale.

8. Dispositif selon la revendication 7, **caractérisé en ce que** la normale surfacique (136b) d'au moins une ouverture de sortie (152) d'au moins un réservoir (102) est alignée sensiblement de manière perpendiculaire par rapport à la verticale.

9. Dispositif selon l'une quelconque des revendications 1 à 8, **caractérisé en ce qu'**au moins une ouverture d'entrée (126) et au moins une ouverture de sortie (152) d'au moins un réservoir (102) sont disposées sensiblement de manière symétrique l'une par rapport à l'autre, par rapport à un plan longitudinal moyen (154) dudit réservoir (102).

10. Dispositif selon l'une quelconque des revendications 1 à 9, **caractérisé en ce qu'**au moins une ouverture d'entrée (126) et au moins une ouverture de sortie (152) d'au moins un réservoir (102) comportent des normales surfaciques (136a, 136b) parallèles l'une par rapport à l'autre, passant par leurs centres de gravités surfaciques respectifs.

11. Dispositif selon l'une quelconque des revendications 1 à 10, **caractérisé en ce qu'**au moins une ouverture d'entrée (126) et/ou au moins une ouverture de sortie (152) d'au moins un réservoir (102) peut être obturée à l'aide d'une soupape.

12. Dispositif selon la revendication 11, **caractérisé en ce que** la soupape est configurée comme soupape à disque (130a, 130b).

13. Dispositif selon l'une quelconque des revendications 11 ou 12, **caractérisé en ce que** la soupape comporte un corps de soupape (134) ayant sensiblement la forme d'un disque, ledit corps de soupape étant aligné dans sa position fermée sensiblement de manière parallèle à l'ouverture d'entrée (126) ou sensiblement de manière parallèle à l'ouverture de sortie (152).

14. Dispositif selon l'une quelconque des revendications 11 à 13, **caractérisé en ce que** la soupape comporte un corps de soupape (134) ayant sensiblement la forme d'un disque, ledit corps de soupape étant aligné dans sa position ouverte sensiblement de manière parallèle à l'ouverture d'entrée (126) ou sensiblement de manière parallèle à l'ouverture de sortie (152).

15. Dispositif selon l'une quelconque des revendications 13 ou 14, **caractérisé en ce que** le dispositif (100) comprend un équipement de déplacement (140) destiné à déplacer le corps de soupape (134) depuis la position ouverte en la position fermée et depuis la position fermée en la position ouverte.

16. Dispositif selon la revendication 15, **caractérisé en ce que** l'équipement de déplacement (140) est un équipement de déplacement pneumatique et/ou hydraulique.

17. Dispositif selon l'une quelconque des revendications 1 à 16, **caractérisé en ce qu'**au moins une ouverture de sortie (152) d'au moins un réservoir (102) débouche dans une préchambre (118) disposée entre l'ouverture de sortie (152) et la masse d'accumulation de chaleur (106) du réservoir (102).

18. Dispositif selon l'une quelconque des revendications 1 à 17, **caractérisé en ce que** la préchambre (118) comporte une section sensiblement rectangulaire.
